(19) Europäisches Patentamt
European Patent Office
Office européen des brevets

(11) **EP 4 238 735 B1**

(12) **EUROPEAN PATENT SPECIFICATION**

(45) Date of publication and mention
of the grant of the patent:
**19.02.2025 Bulletin 2025/08**

(21) Application number: **22775047.8**

(22) Date of filing: **07.03.2022**

(51) International Patent Classification (IPC):
**B29C 41/00** *(2006.01)*  **B29C 41/14** *(2006.01)*
**C08L 11/02** *(2006.01)*  **C08J 5/02** *(2006.01)*

(52) Cooperative Patent Classification (CPC):
(C-Sets available)
**C08L 93/04; B29C 41/003; B29C 41/14;
C08F 236/18; C08J 5/02; C08L 11/02;**
B29K 2011/00; B29L 2031/4864; C08J 2311/02;
C08J 2493/04                                    (Cont.)

(86) International application number:
**PCT/JP2022/009788**

(87) International publication number:
**WO 2022/202253 (29.09.2022 Gazette 2022/39)**

(54) **CHLOROPRENE POLYMER LATEX AND MANUFACTURING METHOD THEREFOR, AND DIP MOLDED BODY**

CHLOROPRENPOLYMERLATEX UND HERSTELLUNGSVERFAHREN DAFÜR SOWIE TAUCHFORMKÖRPER

LATEX DE POLYMÈRE DE CHLOROPRÈNE ET SON PROCÉDÉ DE FABRICATION, ET CORPS MOULÉ PAR IMMERSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2021 JP 2021049015**

(43) Date of publication of application:
**06.09.2023 Bulletin 2023/36**

(73) Proprietor: **Denka Company Limited**
**Tokyo 103-8338 (JP)**

(72) Inventors:
• **ITO Misaki**
**Tokyo 103-8338 (JP)**
• **KATO Masahiro**
**Tokyo 103-8338 (JP)**
• **KUMAGAI Yushi**
**Tokyo 103-8338 (JP)**

(74) Representative: **Hoffmann Eitle**
**Patent- und Rechtsanwälte PartmbB**
**Arabellastraße 30**
**81925 München (DE)**

(56) References cited:
EP-A1- 3 650 478          WO-A1-2012/137663
WO-A1-2016/133191      WO-A1-2021/006118
JP-A- 2000 319 452        JP-A- 2010 126 586
JP-A- 2010 126 586        JP-A- 2011 026 423
JP-A- 2012 111 862        JP-A- 2019 143 002
JP-A- 2019 143 002        JP-A- 2020 152 805
US-B2- 8 883 511

(52) Cooperative Patent Classification (CPC): (Cont.)

C-Sets
**C08K 3/22, C08L 11/02;**
**C08K 5/09, C08L 11/02;**
**C08L 11/02, C08L 93/04, C08K 3/20**

## Description

### Technical Field

The present invention relates to a chloroprene polymer latex and a manufacturing method therefor, and a dip molded body. An aspect of the present invention relates to a chloroprene polymer latex containing a copolymer of chloroprene with 2,3-dichloro-1,3-butadiene and a manufacturing method therefor, and a dip molded body using this chloroprene polymer latex.

### Background Art

Chloroprene polymers have been known as materials for dip molded products such as surgical gloves for medical purposes, laboratory gloves, industrial gloves, balloons, catheters, and rubber boots.

Various techniques concerned with improvement in flexibility of a chloroprene polymer or chloroprene polymers for dip molded products have been proposed. Patent Literature 1 below describes that damping performance is improved by mixing a low-molecular-weight chloroprene polymer having a number average molecular weight in a range of 500 to 50,000, for vibration-proof rubber applications. Patent Literature 2 below describes a polychloroprene latex having a pH of 7 to 14 for dip molded product applications, the polychloroprene latex containing 100 parts by mass of a modified polychloroprene obtained by copolymerizing chloroprene and methacrylic acid, 90 to 150 parts by mass of water, 1 to 5 parts by mass of an emulsifier, and 0.5 to 2.5 parts by mass of potassium ions. Patent Literature 3 below describes a mercaptan-modified polychloroprene latex obtained by copolymerizing chloroprene and 2,3-dichloro-1,3-butadiene for dip molded product applications, in which in a solid state 13C-NMR spectrum of the polychloroprene, a peak area (A) at 126.2 to 127.6 ppm, a peak area (B) at 122.0 to 126.2 ppm, and a peak area (C) at 129.9 to 130.3 ppm are in the ranges represented by General Formula (I) below. Patent Literature 4 below describes a chloroprene polymer latex for dip molded product applications, in which both excellent flexibility and mechanical properties can be achieved in a vulcanized rubber produced by dip molding by the chloroprene polymer latex containing a high-molecular-weight body and a low-molecular-weight body.
[Mathematical Formula 1]

$$\frac{4.0}{100} \leq \frac{A}{B-C} \leq \frac{5.8}{100} \quad \cdots (\text{I})$$

Patent Literature 5 below relates to a polychloroprene-based adhesive composition excellent in spraying properties while maintaining good adhesion.

## Citation List

### Patent Literature

Patent Literature 1: Japanese Unexamined Patent Publication No. H7-292165
Patent Literature 2: Japanese Unexamined Patent Publication No. 2014-114342
Patent Literature 3: International Publication WO 2019/009038
Patent Literature 4: Japanese Unexamined Patent Publication No. 2019-143002
Patent Literature 5: JP 2011 026423 A

## Summary of Invention

### Technical Problem

A chloroprene polymer dip molded coating as a dip molded product is usually excellent in mechanical strength by adding a crosslinking agent such as sulfur or a vulcanization accelerator, and a chloroprene polymer latex has been used as a rubber latex raw material in a dip molded coating such as gloves, balloons, boots, catheters, and the like. On the other hand, there is a tendency that flexibility as high as that of a dip molded coating obtained by using natural rubber or polyisoprene is required, and particularly in glove applications, a chloroprene polymer latex with improved physical properties relating to flexibility directly linked to wearing comfort or coating texture is desired.

Therefore, a main object of the present invention is to provide a chloroprene polymer latex with which a chloroprene polymer dip molded coating having excellent flexibility can be obtained by mixing with a chloroprene polymer latex having a base polymer that is a chloroprene polymer.

### Solution to Problem

That is, the present invention relates to a chloroprene polymer latex containing: a chloroprene polymer; at least one selected from the group consisting of rosin acid, sodium rosinate, and potassium rosinate; and at least one selected from the group consisting of sodium hydroxide and potassium hydroxide, in which a toluene insoluble content of the chloroprene polymer is 10% by mass or less, and a weight average molecular weight of a toluene soluble content is 5,000 to 200,000.

Such a chloroprene polymer latex may be a chloroprene polymer latex in which a dip molded coating provides a modulus at 100% elongation of 0.40 to 0.70 MPa and a breaking strength of 17 MPa or more when measured according to JIS K 6251, the dip molded coating is obtained by vulcanizing a mixed latex composition at 130°C for 4 hours, and the mixed latex composition is obtained by mixing 20 parts by mass of the chloroprene polymer latex, and 80 parts by mass of a chloroprene polymer latex containing a base polymer which is obtained by copolymerizing 5 to 30% by mass of 2,3-dichloro-1,3-butadiene with respect to the total of 100% by mass of chloroprene and 2,3-dichloro-1,3-butadiene, and having a toluene insoluble content of 75% by mass or more.

Furthermore, the present invention relates to a dip molded body using the above-described chloroprene polymer latex. Such a dip molded body may be gloves, balloons, catheters, or boots.

Furthermore, the present invention relates to a manufacturing method for obtaining the above-described chloroprene polymer latex, the method including a polymerization step of subjecting at least one selected from the group consisting of chloroprene and 2,3-dichloro-1,3-butadiene to emulsion polymerization in the presence of a chain transfer agent at a polymerization temperature of 5 to 55°C and a polymerization conversion rate of 50 to 95%, in which in the polymerization step, a blended amount of the chain transfer agent is 0.50 parts by mass or more and less than 15 parts by mass and a blended amount of the 2,3-dichloro-1,3-butadiene is 50 parts by mass or less, with respect to the total of 100 parts by mass of the chloroprene and the 2,3-dichloro-1,3-butadiene.

**Advantageous Effects of Invention**

According to the present invention, it is possible to provide a chloroprene polymer latex with which a chloroprene polymer dip molded coating having excellent flexibility can be obtained by mixing with a chloroprene polymer latex having a base polymer that is a chloroprene polymer. In such a chloroprene polymer latex, for example, when the weight average molecular weight of the toluene soluble content is a relatively low molecular weight of 200,000 or less, very excellent flexibility can be obtained by the plasticizing effect of the low-molecular-weight polymer.

**Description of Embodiments**

Hereinafter, embodiments for carrying out the present invention will be specifically described. Note that, the present invention is not limited to embodiments described below.

In the present specification, "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification can be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. The expression "(meth)acrylic acid" means at least one of acrylic acid and methacrylic acid corresponding thereto, and the same applies also to similar expressions such as "(meth)acrylate". In measurement of "toluene soluble content" and "toluene insoluble content", toluene at room temperature of 23°C can be used.

<Chloroprene polymer latex>

First, a chloroprene polymer latex of a first embodiment of the present invention will be described.

(Chloroprene polymer)

The chloroprene polymer latex of the present embodiment contains a chloroprene polymer. The chloroprene polymer is a polymer having chloroprene (2-chloro-1,3-butadiene) as a monomer unit, and may be a homopolymer of chloroprene or a copolymer of chloroprene with another monomer (a copolymer of chloroprene with 2,3-dichloro-1,3-butadiene, or the like).

The copolymer of chloroprene with 2,3-dichloro-1,3-butadiene is a polymer having chloroprene and 2,3-dichloro-1,3-butadiene as monomer units, and can be obtained by polymerizing a monomer composition containing chloroprene and 2,3-dichloro-1,3-butadiene.

The copolymer of chloroprene with 2,3-dichloro-1,3-butadiene may have a monomer unit of a monomer other than the chloroprene and the 2,3-dichloro-1,3-butadiene. Examples of such a monomer include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), (meth)acrylic acid, 1-chloro-1,3-butadiene, butadiene, isoprene, ethylene, styrene, and (meth)acrylonitrile. On the other hand, the copolymer of chloroprene with 2,3-dichloro-1,3-butadiene may not have a monomer unit of a monomer other than the chloroprene and the 2,3-dichloro-1,3-butadiene, as monomer units, and may be a copolymer substantially composed of a monomer unit of chloroprene and a monomer unit of 2,3-dichloro-1,3-butadiene.

The types of a chain transfer agent used for obtaining a chloroprene polymer are not particularly limited. For example, it is possible to use known chain transfer agents that are usually used in emulsion polymerization of chloroprene, including long chain alkylmercaptans such as n-dodecylmercaptan (1-dodecylmercaptan) and tert-dodecylmercaptan in a mercaptan-based chain transfer agent, and dialkylxanthogen disulfides such as diisopropylxanthogen disulfide and diethylxanthogen disulfide in a xanthogen-based chain transfer agent.

The chloroprene polymer latex of the present embodiment contains at least one selected from the group consisting of rosin acid, sodium rosinate, and potassium rosinate, and at least one selected from the group consisting of sodium hydroxide and potassium hydroxide. An emulsion system of the chloroprene polymer latex of the present embodiment is desired to be adjusted to a base latex in order to prevent aggregation of rubber solid contents during blending, pH fluctuation, and the like.

(Toluene insoluble content)

The toluene insoluble content of the chloroprene polymer is determined in such a manner that a chloroprene polymer obtained by freeze-drying the chloroprene polymer latex is dissolved in toluene and subjected to centrifugal separation, and the mass of the dried product obtained by separating insoluble content (gel fraction) using a 200-mesh wire net and then drying the insoluble content is measured.

The toluene insoluble content (gel fraction) of the chloroprene polymer of the chloroprene polymer latex of the present embodiment is 10% by mass or less with respect to 100% by mass of the chloroprene polymer. When the toluene insoluble content is 10% by mass or less, a modulus value at 100% elongation as an index of flexibility of a dip molded coating obtained by using a mixed chloroprene polymer latex composition is likely to decrease, and excellent flexibility is easily obtained.

The toluene insoluble content may be 8% by mass or less, 6% by mass or less, 5% by mass or less, less than 5% by mass, 4% by mass or less, 3% by mass or less, 2.5% by mass or less, 2% by mass or less, 1.5% by mass or less, 1.2% by mass or less, 1% by mass or less, less than 1% by mass, or 0.8% by mass or less, from the viewpoint of easily obtaining excellent flexibility. The toluene insoluble content may be 0% by mass or more, more than 0% by mass, 0.5% by mass or more, 0.8% by mass or more, 1% by mass or more, more than 1% by mass, 1.2% by mass or more, 1.5% by mass or more, 2% by mass or more, 2.5% by mass or more, 3% by mass or more, 4% by mass or more, 5% by mass or more, or 6% by mass or more. From these viewpoints, the toluene insoluble content may be more than 0% by mass and 10% by mass or less, 0.5 to 10% by mass, 0.8 to 10% by mass, 1 to 10% by mass, more than 0% by mass and 6% by mass or less, 0.5 to 6% by mass, 0.8 to 6% by mass, 1 to 6% by mass, more than 0% by mass and 3% by mass or less, 0.5 to 3% by mass, 0.8 to 3% by mass, or 1 to 3% by mass.

(Weight average molecular weight of toluene soluble content)

The weight average molecular weight of the toluene soluble content (toluene soluble sol fraction) in the chloroprene polymer latex of the present embodiment is 5,000 to 200,000. When the weight average molecular weight is 200,000 or less, a dip molded coating exhibiting excellent flexibility is obtained by the plasticizing effect of the low-molecular-weight polymer. When the weight average molecular weight is 5000 or more, a dip molded coating can be suitably obtained.

The weight average molecular weight of the toluene soluble content may be in the following range from the viewpoint of easily achieving both excellent flexibility and breaking strength. The weight average molecular weight of the toluene soluble content may be 6,000 or more, 7,000 or more, 8,000 or more, 10,000 or more, 12,000 or more, 15,000 or more, 18,000 or more, 20,000 or more, 25,000 or more, 50,000 or more, or 100,000 or more. The weight average molecular weight of the toluene soluble content may be 180,000 or less, 160,000 or less, 100,000 or less, 50,000 or less, 25,000 or less, 20,000 or less, 18,000 or less, 15,000 or less, 12,000 or less, 10,000 or less, 8,000 or less, or 7,000 or less. From these viewpoints, the weight average molecular weight of the toluene soluble content may be 5,000 to 180,000, 6,000 to 180,000, 6,000 to 160,000, 6,000 to 100,000, 6,000 to 50,000, 7,000 to 25,000, 7,000 to 20,000, 7,000 to 15,000, 10,000 to 160,000, 10,000 to 100,000, 10,000 to 50,000, 10,000 to 25,000, 10,000 to 20,000, or 10,000 to 15,000.

The weight average molecular weight of the toluene soluble content can be obtained by dissolving the chloroprene polymer latex of the present embodiment in toluene and measuring the weight average molecular weight of eluted content (sol fraction) by gel permeation chromatography (GPC). The measurement value of the weight average molecular weight varies depending on the blended amount (charged amount) of the chain transfer agent.

[Weight average molecular weight measurement by gel permeation chromatography]

GPC measurement is performed under the following conditions. Calculation of the molecular weight is determined in terms of polystyrene.

· Gel permeation chromatography (GPC) measurement apparatus: Gel permeation chromatograph (HLC-8320) manufactured by Tosoh Corporation
· Column: TSKgel ALPHA-M manufactured by Tosoh Corporation
· Eluent: Tetrahydrofuran (manufactured by KANTO CHEMICAL CO., INC.)
· Eluent flow rate: 1.0 ml/min
· Column temperature: 40°C

· Detection method: Differential refractive index (RI) meter
· Standard curve: Created using standard polystyrene

(Chloroprene copolymerized amount)

In a case where the chloroprene polymer contained in the chloroprene polymer latex of the present embodiment is a copolymer of chloroprene with another monomer, the chloroprene copolymerized amount (the content of the monomer unit of chloroprene; the same applies hereinafter) in the chloroprene polymer may be in the following range with respect to 100% by mass of the total amount of the monomer units in the chloroprene polymer or the total of 100% by mass of the chloroprene copolymerized amount and the 2,3-dichloro-1,3-butadiene copolymerized amount (the content of the monomer unit of 2,3-dichloro-1,3-butadiene; the same applies hereinafter) in the chloroprene polymer, from the viewpoint of easily obtaining excellent flexibility. The chloroprene copolymerized amount may be 100% by mass or less, less than 100% by mass, 95% by mass or less, 90% by mass or less, 85% by mass or less, 80% by mass or less, 75% by mass or less, or 70% by mass or less. The chloroprene copolymerized amount may be 50% by mass or more, 55% by mass or more, 60% by mass or more, 65% by mass or more, 70% by mass or more, 75% by mass or more, 80% by mass or more, 85% by mass or more, or 90% by mass or more. From these viewpoints, the chloroprene copolymerized amount may be 50% by mass or more and less than 100% by mass, 70% by mass or more and less than 100% by mass, 80% by mass or more and less than 100% by mass, 85% by mass or more and less than 100% by mass, 90% by mass or more and less than 100% by mass, 50 to 90% by mass, 70 to 90% by mass, 80 to 90% by mass, or 85 to 90% by mass.

(2,3-Dichloro-1,3-butadiene copolymerized amount)

In a case where the chloroprene polymer contained in the chloroprene polymer latex of the present embodiment is a copolymer of chloroprene with another monomer, the 2,3-dichloro-1,3-butadiene copolymerized amount in the chloroprene polymer may be in the following range with respect to 100% by mass of the total amount of the monomer units in the chloroprene polymer or the total of 100% by mass of the chloroprene copolymerized amount and the 2,3-dichloro-1,3-butadiene copolymerized amount in the chloroprene polymer, from the viewpoint of easily obtaining excellent flexibility. The 2,3-dichloro-1,3-butadiene copolymerized amount may be 50% by mass or less, 45% by mass or less, 40% by mass or less, 35% by mass or less, 30% by mass or less, 25% by mass or less, 20% by mass or less, 15% by mass or less, or 10% by mass or less. The 2,3-dichloro-1,3-butadiene copolymerized amount may be 0% by mass or more, more than 0% by mass, 5% by mass or more, 10% by mass or more, 15% by mass or more, 20% by mass or more, 25% by mass or more, or 30% by mass or more. From these viewpoints, the 2,3-dichloro-1,3-butadiene copolymerized amount may be more than 0% by mass and 50% by mass or less, more than 0% by mass and 30% by mass or less, more than 0% by mass and 20% by mass or less, more than 0% by mass and 15% by mass or less, more than 0% by mass and 10% by mass or less, 10 to 50% by mass, 10 to 30% by mass, 10 to 20% by mass, or 10 to 15% by mass.

The 2,3-dichloro-1,3-butadiene copolymerized amount is determined by measuring the pyrolysis gas chromatograph of the chloroprene polymer obtained by freeze-drying the chloroprene polymer latex.

[Measurement of pyrolysis gas chromatograph]

The pyrolysis gas chromatograph can be carried out under the following measurement conditions.

· Used column: DB-5 0.25 mm$\phi$ × 30 m (film thickness: 1.0 $\mu$m)
· Column temperature: 50°C → 10°C/min → 120°C → 25°C/min → 300°C
· Injection port temperature: 270°C
· Detector temperature: 280°C
· Sample amount: 0.05 mg

(Effect obtained by chloroprene polymer latex)

As a chloroprene polymer latex to be mixed in order to measure the flexibility, the breaking strength, and the breaking elongation of the chloroprene polymer latex of the present embodiment, it is possible to use a chloroprene polymer latex containing a base polymer, which is obtained by copolymerizing 5 to 30% by mass of 2,3-dichloro-1,3-butadiene with respect to the total of 100% by mass of chloroprene and 2,3-dichloro-1,3-butadiene, and having a toluene insoluble content of 75% by mass or more, and DENKA CHLOROPRENE LV-60A manufactured by Denka Company Limited (high gel type, crystallization speed: very slow) can be adopted. A mixed latex composition is prepared by stirring and mixing 20 parts by mass of a chloroprene polymer latex A (low-molecular-weight chloroprene polymer latex), which is the chloroprene polymer latex of the present embodiment, and 80 parts by mass of a chloroprene polymer latex B to be mixed with the chloroprene polymer latex A at a solid content ratio with respect to the total of 100 parts by mass of the chloroprene polymer latex A and the chloroprene polymer latex B.

According to the chloroprene polymer latex of the present embodiment, it is possible to obtain a chloroprene polymer dip molded coating having excellent flexibility by mixing with a chloroprene polymer latex having a base polymer that is a chloroprene polymer. Specifically, a dip molded coating provides a modulus at 100% elongation of 0.40 to 0.70 MPa and a breaking strength of 17 MPa or more when measured according to JIS K 6251, the dip molded coating is obtained by vulcanizing a mixed latex composition at 130°C for 4 hours, and the mixed latex composition is obtained by mixing 20 parts by mass (solid content ratio) of the chloroprene polymer latex of the present embodiment, and 80 parts by mass (solid content ratio) of a chloroprene polymer latex (DENKA CHLOROPRENE LV-60A manufactured by Denka Company Limited) containing a base polymer which is obtained by copolymerizing 5 to 30% by mass of 2,3-dichloro-1,3-butadiene with respect to the total of 100% by mass of chloroprene and 2,3-dichloro-1,3-butadiene, and having a toluene insoluble content of 75% by mass or more. In particular, in "D3577" of ASTM standard in surgical glove applications, the breaking strength is defined to be 17 MPa or more. This dip molded coating has a sufficient mechanical strength while having very excellent flexibility. Note that, "JIS" means Japanese Industrial Standards.

Although a conventional chloroprene polymer is usually excellent in mechanical strength, there is a tendency that flexibility as high as that of a dip molded coating obtained by using natural rubber or polyisoprene is required, and particularly in glove applications, a chloroprene polymer latex (chloroprene polymer latex composition) with improved physical properties relating to flexibility directly linked to wearing comfort or coating texture is desired.

A dip molded coating obtained from a mixed latex composition, which is obtained by blending the chloroprene polymer latex of the present embodiment with a high-gel-type chloroprene polymer latex, has a low value of the modulus at 100% elongation as an index of flexibility while maintaining a high breaking strength, and is very excellent in flexibility. In particular, referring to "D3577" of ASTM standard in surgical glove applications, it is found that the dip molded coating has a sufficient mechanical strength while having very excellent flexibility. Therefore, the chloroprene polymer latex of the present embodiment is suitably used as a raw material for a dip molded body.

<Dip molded body>

Next, a dip molded body of a second embodiment of the present invention will be described. The dip molded body of the present embodiment is a dip molded body using the chloroprene polymer latex of the first embodiment, and for example, is obtained by blending the chloroprene polymer latex of the first embodiment with another chloroprene polymer latex having a toluene insoluble content of 75% by mass or more and then dip-molding. That is, the dip molded body of the present embodiment may be, for example, a dip molded body of a mixed latex composition obtained by mixing the chloroprene polymer latex of the first embodiment with a chloroprene polymer latex having a toluene insoluble content of 75% by mass or more. The dip molded body of the present embodiment has a low modulus at 100% elongation, is soft, and is excellent in mechanical properties such as strength and elongation. The dip molded body of the present embodiment may be gloves, balloons, catheters, or boots.

Examples of a method for manufacturing (method for forming) a dip molded body of the present embodiment include a congealing liquid dipping method, but the molding method is not limited thereto, and the dip-molded article may be molded according to a common method.

The dip molded body of the present embodiment may not contain at least one selected from the group consisting of a vulcanizing agent and a vulcanization accelerator, and may contain at least one selected from the group consisting of a vulcanizing agent and a vulcanization accelerator. That is, the dip molded body of the present embodiment includes an aspect containing a vulcanizing agent and not containing a vulcanization accelerator, an aspect not containing a vulcanizing agent and containing a vulcanization accelerator, an aspect containing a vulcanizing agent and a vulcanization accelerator, and an aspect not containing a vulcanizing agent and a vulcanizing agent. Whether or not a vulcanizing agent and a vulcanization accelerator are blended may be determined depending on an intended dip molded body.

Examples of the vulcanizing agent include sulfur, zinc oxide, and magnesium oxide, but are not limited thereto.

The vulcanization accelerator is a chemical agent that is added for the purpose of shortening a vulcanization time, lowering a vulcanization temperature, decreasing a vulcanizing agent amount, improving physical properties of a vulcanized rubber, and the like by interacting with a vulcanizing agent to increase a vulcanization rate at the time of vulcanization of a raw material rubber. The vulcanization accelerator generally refers to a chemical agent that accelerates a sulfur vulcanization reaction.

Examples of the vulcanization accelerator that is generally used in vulcanization of the chloroprene polymer latex include thiuram-based, dithiocarbamate-based, thiourea-based, guanidine-based, xanthate-based, and thiazole-based vulcanization accelerators, but are not limited thereto. The vulcanization accelerator is used alone or in combination with two or more kinds thereof as necessary.

Examples of the thiuram-based vulcanization accelerator include tetramethylthiuram disulfide, tetraethylthiuram disulfide, tetrabutylthiuram disulfide, tetrakis(2-ethylhexyl)thiuram disulfide, tetramethylthiuram monosulfide, and dipentamethylenethiuram tetrasulfide.

Examples of dithiocarbamate-based vulcanization accelerator include sodium dibutyldithiocarbamate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, copper dimethyldithiocarbamate, ferric dimethyldithiocarbamate, and tellurium diethyldithiocarbamate, and particularly, zinc dibutyldithiocarbamate is suitably used.

Examples of the thiourea-based vulcanization accelerator include ethylene thiourea, N,N'-diethylthiourea, trimethylthiourea, and N,N'-diphenylthiourea.

Examples of the guanidine-based vulcanization accelerator include 1,3-diphenylguanidine, 1,3-di-o-tolylguanidine, 1-o-tolylbiguanide, and dicatechol borate di-o-tolylguanidine salt.

Examples of the xanthate-based vulcanization accelerator include zinc butylxanthate and zinc isopropylxanthate.

Examples of the thiazole-based vulcanization accelerator include 2-mercaptobenzothiazole, di-2-benzothiazolyl disulfide, 2-mercaptobenzothiazole zinc salt, 2-mercaptobenzothiazole cyclohexylamine salt, and 2-(4'-morpholinodithio)benzothiazole.

<Method for manufacturing chloroprene polymer latex>

Next, a method for manufacturing a chloroprene polymer latex of a third embodiment of the present invention will be described.

The method for manufacturing a chloroprene polymer latex of the present embodiment includes a polymerization step of subjecting at least one selected from the group consisting of chloroprene and 2,3-dichloro-1,3-butadiene to emulsion polymerization. The polymerization step may be a step of subjecting chloroprene, 2,3-dichloro-1,3-butadiene, and alkyl mercaptan to emulsion polymerization to obtain a chloroprene polymer latex.

The 2,3-dichloro-1,3-butadiene copolymerized amount of the chloroprene polymer contained in the chloroprene polymer latex may be, as described above, in a range of 50% by mass or less (0 to 50% by mass) with respect to the total of 100% by mass of the chloroprene and the 2,3-dichloro-1,3-butadiene. The blended amount (charged amount) of the 2,3-dichloro-1,3-butadiene in the polymerization step (before emulsion polymerization initiation) may be 50 parts by mass or less or 30 parts by mass or less with respect to the total of 100 parts by mass of the chloroprene and the 2,3-dichloro-1,3-butadiene. The blended amount of the 2,3-dichloro-1,3-butadiene in the polymerization step may be 0 parts by mass, and may be more than 0 parts by mass and 50 parts by mass or less, 0 to 50 parts by mass, or 0 to 30 parts by mass. As a numerical range of the blended amount of the 2,3-dichloro-1,3-butadiene in the polymerization step, the numerical range described above for the 2,3-dichloro-1,3-butadiene copolymerized amount in the chloroprene polymer contained in the chloroprene polymer latex of the present embodiment may be used.

As described above, the types of the chain transfer agent used at the time of the emulsion polymerization are not particularly limited. As the chain transfer agent, for example, it is possible to use known chain transfer agents that are usually used in emulsion polymerization of chloroprene, including long chain alkylmercaptans such as n-dodecylmercaptan (1-dodecylmercaptan) and tert-dodecylmercaptan, dialkylxanthogen disulfides such as diisopropylxanthogen disulfide and diethylxanthogen disulfide, or the like.

In the chloroprene polymer latex, the weight average molecular weight can be adjusted by the blended amount (charged amount) of the chain transfer agent before emulsion polymerization initiation. For example, the blended amount of the chain transfer agent (for example, the blended amount of a mercaptan-based chain transfer agent (such as n-dodecylmercaptan) or a xanthogen-based chain transfer agent) may be 0.50 parts by mass or more and less than 15 parts by mass with respect to the total of 100 parts by mass of the chloroprene and the 2,3-dichloro-1,3-butadiene. Thereby, the weight average molecular weight of the toluene soluble content is easily adjusted to 5,000 to 200,000, and the flexibility of a dip molded coating, which is obtained by using a mixed latex composition that is a mixture of the chloroprene polymer latex of the present embodiment and a high-gel-type chloroprene polymer latex, is easily improved.

The blended amount of the chain transfer agent may be in the following range with respect to the total of 100 parts by mass of the chloroprene and the 2,3-dichloro-1,3-butadiene from the viewpoint of adjusting the flexibility of a dip molded coating. The blended amount of the chain transfer agent may be 0.50 parts by mass or more, 0.80 parts by mass or more, 1.0 part by mass or more, 2.0 parts by mass or more, 3.0 parts by mass or more, 5.0 parts by mass or more, 6.0 parts by mass or more, or 10 parts by mass or more. The blended amount of the chain transfer agent may be 10 parts by mass or less, 6.0 parts by mass or less, 5.0 parts by mass or less, 3.0 parts by mass or less, 2.0 parts by mass or less, 1.0 part by mass or less, or 0.80 parts by mass or less. From these viewpoints, the blended amount of the chain transfer agent may be 0.50 to 10 parts by mass, 0.80 to 10 parts by mass, 1.0 to 10 parts by mass, 2.0 to 10 parts by mass, 3.0 to 10 parts by mass, 0.50 to 5.0 parts by mass, 0.80 to 5.0 parts by mass, 1.0 to 5.0 parts by mass, 2.0 to 5.0 parts by mass, or 3.0 to 5.0 parts by mass.

In the polymerization step, at least one selected from the group consisting of chloroprene and 2,3-dichloro-1,3-butadiene may be subjected to emulsion polymerization in the presence of a chain transfer agent, and the blended amount of the chain transfer agent may be 0.50 parts by mass or more and less than 15 parts by mass with respect to the total of 100 parts by mass of the chloroprene and the 2,3-dichloro-1,3-butadiene. Furthermore, from the viewpoint of achieving both the flexibility and the breaking strength of a dip molded coating obtained by using the mixed latex composition, based on Examples described below, the weight average molecular weight of the toluene soluble content is preferably in a range of 7,000 to 25,000.

The emulsifier used in the emulsion polymerization is suitably rosin acids. By using rosin acid containing conjugate resin acid components, or rosin acid or a rosin acid metal salt from which these components are removed by disproportion treatment, aggregation of rubber solid contents during blending with a base latex, pH fluctuation, and the like can be prevented.

Furthermore, other emulsifiers, fatty acids, and the like that are generally used can also be used. Examples of the other emulsifiers include a metal salt of aromatic sulfonic acid formalin condensate (for example, a sodium salt of β-naphthalene sulfonic acid formalin condensate), sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate.

The content of an anionic surfactant excluding rosin acid is preferably 0.2 to 1.0% by mass with respect to 100% by mass of the chloroprene polymer contained in the chloroprene polymer latex. Therefore, the blended amount (charged amount) of the anionic surfactant excluding rosin acid before emulsion polymerization initiation is preferably set within a range of 0.2 to 0.9 parts by mass with respect to the total of 100 parts by mass of the chloroprene and the 2,3-dichloro-1,3-butadiene.

The pH of the aqueous emulsion at the time of emulsion polymerization initiation is preferably 10.5 to 13.5. The aqueous emulsion refers to a liquid mixture of alkyl mercaptan, chloroprene, 2,3-dichloro-1,3-butadiene, and the like before emulsion polymerization initiation, but also encompasses a case where the composition thereof varies by adding respective components afterward, portionwise, etc. When the pH of the aqueous emulsion at the time of emulsion polymerization initiation is 10.5 or more, the polymerization reaction can be more stably controlled. When the pH is 13.5 or less, an excessive increase in viscosity during polymerization is suppressed, and the polymerization reaction can be more stably controlled.

The polymerization temperature of emulsion polymerization may be within a range of 5 to 55°C. When the polymerization temperature is 5°C or higher, the emulsion is hardly frozen. From the same viewpoint, the polymerization temperature may be 10°C or higher, 15°C or higher, 20°C or higher, 25°C or higher, 30°C or higher, 35°C or higher, 40°C or higher, or 45°C or higher. When the polymerization temperature is 55°C or lower, transpiration and boiling of the chloroprene monomer are easily suppressed. From the same viewpoint, the polymerization temperature may be 50°C or lower, 45°C or lower, 40°C or lower, 35°C or lower, 30°C or lower, 25°C or lower, 20°C or lower, 15°C or lower, or 10°C or lower. From these viewpoints, the polymerization temperature may be 10 to 50°C, 15 to 50°C, 30 to 50°C, 10 to 40°C, 15 to 40°C, or 30 to 40°C.

As a polymerization initiator, potassium persulfate, benzoyl peroxide, ammonium persulfate, hydrogen peroxide, or the like, which is usually used in radical polymerization, may be used.

The polymerization conversion rate may be in a range of 50 to 95%. In the polymerization step, emulsion polymerization can be performed at a polymerization temperature of 5 to 55°C and a polymerization conversion rate of 50 to 95%. The polymerization reaction can be terminated by adding a polymerization inhibitor. When the polymerization conversion rate is 50% or more, there is an advantage in terms of production cost. From the same viewpoint, the polymerization conversion rate may be 60% or more, 70% or more, 75% or more, 80% or more, 85% or more, or 90% or more. When the polymerization conversion rate is 95% or less, a decrease in polymerization reactivity due to reduction of unreacted monomers is avoided, and a decrease in productivity is avoided. From the same viewpoint, the polymerization conversion rate may be 90% or less, 85% or less, 80% or less, or 75% or less. From these viewpoints, the polymerization conversion rate may be 60 to 90%, 60 to 85%, 60 to 80%, 75 to 90%, 75 to 85%, or 75 to 80%.

Examples of the polymerization inhibitor include diethylhydroxylamine, thiodiphenylamine, 4-tert-butylcatechol, and 2,2'-methylenebis-4-methyl-6-tert-butylphenol. The unreacted monomer after the completion of emulsion polymerization can be removed by a common method such as distillation under a reduced pressure.

Furthermore, to the chloroprene polymer latex obtained by the method for manufacturing a chloroprene polymer latex of the present embodiment, a freezing stabilizer, an emulsion stabilizer, a viscosity modifier, an anti-aging agent, an antioxidant, an antiseptic, or the like can be arbitrarily added after polymerization.

**Examples**

Hereinafter, the present invention will be more specifically described on the basis of Examples, Comparative Examples, and Reference Examples; however, the present invention is not limited to these Examples.

<Example 1>

(Production of chloroprene polymer latex)

To a polymerization tank having an inner volume of 40 L, 90 parts by mass of a chloroprene monomer, 10 parts by mass of a 2,3-dichloro-1,3-butadiene monomer, 3.0 parts by mass of 1-dodecylmercaptan, 90 parts by mass or pure water, 4.8 parts by mass of a potassium rosinate salt (trade name "RONDIS K-25", manufactured by ARAKAWA CHEMICAL INDUSTRIES, LTD.), 0.75 parts by mass of potassium hydroxide, and 0.40 parts by mass of a sodium salt of β-naphthalene sulfonic acid formalin condensate (trade name "DEMOL N", manufactured by Kao Corporation) were added. The pH of the aqueous emulsion before polymerization initiation was 12.9. 0.1 parts by mass of potassium persulfate was added as a polymerization initiator, and polymerization was performed under a nitrogen flow at a polymerization temperature of 35°C. 0.01 parts by mass of diethylhydroxylamine as a polymerization inhibitor was added at the time point of a polymerization conversion rate of 80% to terminate the polymerization, thereby obtaining a latex.

The above-described latex was subjected to distillation under a reduced pressure to remove unreacted monomers and moisture, thereby obtaining a chloroprene polymer latex A (mercaptan-modified chloroprene polymer latex) having a solid content of 60%.

(Measurement of 2,3-dichloro-1,3-butadiene copolymerized amount)

The chloroprene polymer obtained by freeze-drying the above-described chloroprene polymer latex A was cut into 0.05 mg of a test piece, and measurement was performed by pyrolysis gas chromatograph. The 2,3-dichloro-1,3-butadiene copolymerized amount of the chloroprene polymer latex A measured by this pyrolysis gas chromatograph was 10.3% by mass with respect to the total of 100% by mass of the chloroprene and the 2,3-dichloro-1,3-butadiene in the chloroprene polymer. From this analysis value, it was confirmed that the 2,3-dichloro-1,3-butadiene copolymerized amount in the chloroprene polymer has approximately correlation with the blended amount (charged amount) of the 2,3-dichloro-1,3-butadiene.

(Measurement of toluene insoluble content)

1 g of a chloroprene polymer obtained by freeze-drying the above-described chloroprene polymer latex A was cut into 2 mm square to obtain a small piece, and then this small piece was placed in a conical beaker and dissolved with toluene for 16 hours. Thereafter, centrifugal separation was performed, the gel fractions were separated using a 200-mesh wire net and dried to obtain a dried product, and the mass of the dried product was measured to calculate the toluene insoluble content. The toluene insoluble content of the chloroprene polymer latex A was 0.8% by mass.

(Measurement of weight average molecular weight)

The weight average molecular weight of eluted content (sol fraction) when the above-described chloroprene polymer latex A was dissolved in toluene was measured in terms of polystyrene by gel permeation chromatography and was found to be 24,000.

(Production of evaluation sample)

As the chloroprene polymer latex B containing a base polymer, which is obtained by copolymerizing 5 to 30% by mass of 2,3-dichloro-1,3-butadiene with respect to the total of 100% by mass of the chloroprene and the 2,3-dichloro-1,3-butadiene, and having a toluene insoluble content of 75% by mass or more, DENKA CHLOROPRENE "LV-60A" manufactured by Denka Company Limited was prepared. When the total of the above-described chloroprene polymer latex A and the chloroprene polymer latex B was regarded as 100 parts by mass, a chloroprene polymer latex composition C (mixed latex composition) was obtained by stirring and mixing the chloroprene polymer latex A and the chloroprene polymer latex B at a ratio of 20 parts by mass : 80 parts by mass (solid content ratio).

7.1 parts by mass of an aqueous dispersion was mixed with 100 parts by mass of solid content of the chloroprene polymer latex composition C, and then water was added to adjust the entire solid content concentration of the blended product to 30% by mass, thereby producing a chloroprene polymer latex composition D containing a vulcanizing agent, a vulcanization accelerator, and an anti-aging agent. The above-described aqueous dispersion was prepared by mixing 1 part by mass of sulfur (vulcanizing agent), 2 parts by mass of zinc oxide (vulcanizing agent, trade name "Zinc oxide II", manufactured by SAKAI CHEMICAL INDUSTRY CO., LTD.), 2 parts by mass of zinc d-n-butyldithiocarbamate (vulcanization accelerator, trade name "NOCCELER BZ", manufactured by OUCHI SHINKO CHEMICAL INDUSTRIAL CO., LTD.), 2 parts by mass of a butylated reaction product of p-cresol and dicyclopentadiene (anti-aging agent, trade name "NOCRAC PBK", manufactured by OUCHI SHINKO CHEMICAL INDUSTRIAL CO., LTD.), 0.1 parts by mass of a sodium salt of β-naphthalene sulfonic acid formalin condensate (trade name "DEMOL N", manufactured by Kao Corporation), and 11 parts by mass of water by using a ceramic ball mill at 20°C for 16 hours.

A ceramic cylinder (manufactured by SHINKO IND. LTD.) having an outside diameter of 50 mm was immersed for 1 second in a congealing liquid obtained by mixing 62 parts by mass of water, 35 parts by mass of potassium nitrate tetrahydrate, and 3 parts by mass of calcium carbonate and then the cylinder was taken out. After drying was performed at room temperature of 23°C for 3 minutes, the above-described cylinder was immersed in the above-described chloroprene polymer latex composition D for 10 seconds. Thereafter, washing was performed with running water at 45°C for 1 minute and then vulcanization was performed at 130°C for 4 hours to produce a vulcanized film (a dip molded coating; a vulcanized film containing a vulcanizing agent, a vulcanization accelerator, and an anti-aging agent) as an evaluation sample. The vulcanized film was peeled off from the outer periphery of the cylinder and then evaluation was performed.

(Evaluation of evaluation sample)

The modulus at 100% elongation, the breaking strength, and the breaking elongation of the above-described vulcanized film were measured according to JIS K 6251.

<Examples 2 to 7 and Comparative Examples 1 to 3>

The chloroprene polymer latex A was polymerized under the conditions shown in Table 1 to produce and evaluate a vulcanized film in the same manner as in Example 1.

<Result>

The results of Examples 1 to 7 and Comparative Examples 1 to 3 are shown in Table 1.

[Table 1]

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Chloroprene | 90 | 80 | 100 | 90 | 85 | 80 | 70 | 90 | 85 | 80 |
| 2,3-Dichloro-1,3-butadiene | 10 | 20 | 0 | 10 | 15 | 20 | 30 | 10 | 15 | 20 |
| 1-Dodecylmercaptan | 3.0 | 0.50 | 2.0 | 6.0 | 0.80 | 10 | 5.0 | 0.30 | 15 | 0.004 |
| Pure water | 90 | 90 | 90 | 90 | 90 | 90 | 90 | 90 | 90 | 90 |
| Potassium rosinate salt | 4.8 | 4.8 | 4.8 | 4.8 | 4.3 | 5.1 | 4.2 | 4.8 | 4.8 | 4.8 |
| Potassium hydroxide | 0.75 | 0.75 | 0.75 | 0.75 | 0.77 | 0.73 | 0.77 | 0.75 | 0.75 | 0.75 |
| Sodium salt of β-naphthalene sulfonic acid formalin condensate | 0.40 | 0.40 | 0.40 | 0.40 | 0.40 | 0.40 | 0.40 | 0.40 | 0.40 | 0.40 |
| Polymerization temperature (°C) | 35 | 15 | 40 | 45 | 15 | 10 | 15 | 15 | 40 | 15 |
| Polymerization conversion rate | 80 | 80 | 60 | 85 | 90 | 80 | 75 | 85 | 80 | 25 |
| Toluene insoluble content (% by mass) | 0.8 | 1.4 | 4.2 | 6.0 | 1.6 | 2.5 | 1.1 | 1.4 | 0.4 | 6.0 |
| Weight average molecular weight | 24,000 | 160,000 | 33,000 | 10,000 | 70,000 | 7,000 | 15,000 | 230,000 | 4,300 | 1,650,000 |
| Dip molded coating (130°C × 4 hours) | | | | | | | | | | |
| Modulus at 100% elongation (MPa) | 0.52 | 0.68 | 0.68 | 0.55 | 0.63 | 0.46 | 0.49 | 0.74 | Unavailable production | 0.80 |
| Breaking strength (MPa) | 18.8 | 17.4 | 17.6 | 18.8 | 17.7 | 18.5 | 19.2 | 17.6 | | 18.9 |
| Breaking elongation (%) | 1180 | 1100 | 1150 | 1260 | 1150 | 1320 | 1200 | 1100 | | 1050 |

As apparent from Table 1, the dip molded coating obtained by using the mixed latex composition (chloroprene polymer latex composition C) that is a mixture of the chloroprene polymer latex A of each of Examples 1 to 7 and DENKA CHLOROPRENE LV-60A (chloroprene polymer latex B) had a low value of the modulus at 100% elongation, was soft, and was excellent in mechanical properties such as breaking strength and breaking elongation. Furthermore, according to Examples 1, 4, 6, and 7, it is found that when the weight average molecular weight of the chloroprene polymer latex A is in a range of 7,000 to 25,000, the dip molded coating has a further lower value of the modulus at 100% elongation, is soft, and has a high breaking strength.

In Comparative Example 1, the weight average molecular weight of the chloroprene polymer latex A was more than 200,000, the value of the modulus at 100% elongation of a dip molded coating obtained by using the mixed latex composition was high, and flexibility was poor.

In Comparative Example 2, the weight average molecular weight of the chloroprene polymer latex A was less than 5,000, and when a dip molded coating was tried to be produced by using the mixed latex composition, the low-molecular-weight chloroprene polymer of the chloroprene polymer latex A was bled (leaked out) to cause severe stickiness, so that a dip molded coating could not be produced.

In Comparative Example 3, the weight average molecular weight of the chloroprene polymer latex A was more than 200,000, the value of the modulus at 100% elongation of a dip molded coating obtained by using the mixed latex composition was high, and flexibility was poor.

<Reference Examples 1 and 2>

As Reference Example 1, a dip molded coating (vulcanized film) was tried to be produced in the same manner as described above by using only the above-described chloroprene polymer latex A of Example 1 without mixing with the above-described chloroprene polymer latex B, but stickiness became severe so that a dip molded coating could not be produced.

As Reference Example 2, when a dip molded coating (vulcanized film) was tried to be produced and evaluated in the same manner as described above by using only the above-described chloroprene polymer latex B (DENKA CHLOROPRENE "LV-60A" manufactured by Denka Company Limited) without mixing with the above-described chloroprene polymer latex A, the modulus at 100% elongation was 0.82 MPa, the breaking strength was 21.2 MPa, and the breaking elongation was 1050%. The breaking strength was excellent, but the value of the modulus at 100% elongation was high and flexibility was poor.

From these points, it is found that a dip molded coating excellent in flexibility is obtained by mixing the chloroprene polymer latex of the present invention with the chloroprene polymer latex in which the base polymer is a chloroprene polymer.

## Claims

1. A chloroprene polymer latex comprising: a chloroprene polymer; at least one selected from the group consisting of rosin acid, sodium rosinate, and potassium rosinate; and at least one selected from the group consisting of sodium hydroxide and potassium hydroxide, wherein

   a toluene insoluble content of the chloroprene polymer is 10% by mass or less, **characterised in that**
   a weight average molecular weight of a toluene soluble content is 5,000 to 200,000.

2. The chloroprene polymer latex according to claim 1, wherein the weight average molecular weight of the toluene soluble content is 5,000 to 180,000.

3. The chloroprene polymer latex according to claim 1 or claim 2, wherein the toluene insoluble content of the chloroprene polymer is more than 0% by mass and 10% by mass or less.

4. A dip molded coating, obtainable by a method comprising

   the steps of:
   mixing

      i) 20 parts by mass of the chloroprene polymer latex according to any one of claims 1-3, and
      ii) 80 parts by mass of a chloroprene polymer latex containing a base polymer which is obtained by copolymerizing 5 to 30% by mass of 2,3-dichloro-1,3-butadiene with respect to a total of 100% by mass of chloroprene and 2,3-dichloro-1,3-butadiene, and having a toluene insoluble content of 75% by mass or more,

   to obtain a mixed latex composition; and
   vulcanizing the mixed latex composition at 130°C for 4 hours to obtain the dip molded coating;
   wherein the dip molded coating provides a modulus at 100% elongation of 0.40 to 0.70 MPa and a breaking strength of 17 MPa or more when measured according to JIS K 6251.

5. A dip molded body using:

   the chloroprene polymer latex according to any one of claims 1-3, or
   the dip molded coating according to claim 4.

6. The dip molded body according to claim 5, wherein the dip molded body is gloves, balloons, catheters, or boots.

7. A manufacturing method for obtaining the chloroprene polymer latex according to any one of claims 1-3, the method comprising:

a polymerization step of subjecting at least one selected from the group consisting of chloroprene and 2,3-dichloro-1,3-butadiene to emulsion polymerization in the presence of a chain transfer agent at a polymerization temperature of 5 to 55°C and a polymerization conversion rate of 50 to 95%, wherein in the polymerization step, a blended amount of the chain transfer agent is 0.50 parts by mass or more and less than 15 parts by mass and a blended amount of the 2,3-dichloro-1,3-butadiene is 50 parts by mass or less, with respect to a total of 100 parts by mass of the chloroprene and the 2,3-dichloro-1,3-butadiene.

**Patentansprüche**

1. Chloroprenpolymerlatex, umfassend: ein Chloroprenpolymer; mindestens eines, ausgewählt aus der Gruppe, bestehend aus Kolophoniumsäure, Kolophoniumsäure-Natriumsalz und Kolophoniumsäure-Kaliumsalz; und mindestens eines, ausgewählt aus der Gruppe, bestehend aus Natriumhydroxid und Kaliumhydroxid, wobei

ein in Toluol unlöslicher Anteil des Chloroprenpolymers 10 Massen-% oder weniger beträgt, **dadurch gekennzeichnet, dass** ein gewichtsmittleres Molekulargewicht eines toluollöslichen Anteils 5.000 bis 200.000 beträgt.

2. Chloroprenpolymerlatex gemäß Anspruch 1, wobei das gewichtsmittlere Molekulargewicht des toluollöslichen Anteils 5.000 bis 180.000 beträgt.

3. Chloroprenpolymerlatex gemäß Anspruch 1 oder 2, wobei der in Toluol unlösliche Anteil des Chloroprenpolymers mehr als 0 Massen-% und 10 Massen-% oder weniger beträgt.

4. Tauchgeformte Beschichtung, erhältlich durch ein Verfahren, umfassend die Schritte:

das Mischen von

i) 20 Masseteilen des Chloroprenpolymerlatex gemäß einem der Ansprüche 1-3, und ii) 80 Masseteilen eines Chloroprenpolymerlatex, der ein Basispolymer, erhalten durch Copolymerisation von 5 bis 30 Massen-% 2,3-Dichlor-1,3-butadien, bezogen auf insgesamt 100 Massen-% Chloropren und 2,3-Dichlor-1,3-butadien, enthält und einen in Toluol unlöslichen Anteil von 75 Massen-% oder mehr aufweist,

um eine gemischte Latexzusammensetzung zu erhalten; und das Vulkanisieren der gemischten Latexzusammensetzung bei 130°C für 4 Stunden, um die tauchgeformte Beschichtung zu erhalten; wobei die tauchgeformte Beschichtung einen Modul bei 100% Dehnung von 0,40 bis 0,70 MPa und eine Bruchfestigkeit von 17 MPa oder mehr, gemessen gemäß JIS K 6251, aufweist.

5. Tauchformkörper, der

den Chloroprenpolymerlatex gemäß einem der Ansprüche 1-3 oder die tauchgeformte Beschichtung gemäß Anspruch 4 verwendet.

6. Tauchformkörper gemäß Anspruch 5, wobei der Tauchformkörper Handschuhe, Ballone, Katheter oder Stiefel ist.

7. Herstellungsverfahren zum Erhalt des Chloroprenpolymerlatex gemäß einem der Ansprüche 1-3, wobei das Verfahren umfasst:

einen Polymerisationsschritt, bei dem mindestens eines, ausgewählt aus der Gruppe, bestehend aus Chloropren und 2,3-Dichlor-1,3-butadien, einer Emulsionspolymerisation in Gegenwart eines Kettenübertragungsmittels bei einer Polymerisationstemperatur von 5 bis 55°C und einer Polymerisationsumwandlungsrate von 50 bis 95% unterzogen wird, wobei in dem Polymerisationsschritt, bezogen auf insgesamt 100 Massenteile Chloropren und 2,3-Dichlor-1,3-butadien, eine Mischungsmenge des Kettenübertragungsmittels 0,50 Massenteile oder mehr und weniger als 15 Massenteile beträgt und eine Mischungsmenge des 2,3-Dichlor-1,3-Butadien 50 Massenteile oder weniger beträgt.

**Revendications**

1. Latex de polymère de chloroprène comprenant : un polymère de chloroprène ; au moins un sélectionné parmi le groupe consistant en acide de colophane, colophane de sodium, et colophane de potassium ; et au moins un sélectionné parmi le groupe consistant en hydroxyde de sodium et hydroxyde de potassium, dans lequel

une teneur insoluble dans le toluène du polymère de chloroprène est de 10 % en masse ou moins, **caractérisé en ce que**
un poids moléculaire moyen en poids d'un composant soluble dans le toluène est de 5 000 à 200 000.

2. Latex de polymère de chloroprène selon la revendication 1, dans lequel le poids moléculaire moyen en poids de la teneur soluble dans le toluène est de 5 000 à 180 000.

3. Latex de polymère de chloroprène selon la revendication 1 ou la revendication 2, dans lequel la teneur insoluble dans le toluène du polymère de chloroprène est supérieure à 0 % en masse et de 10 % en masse ou moins.

4. Revêtement moulé par immersion, pouvant être obtenu par un procédé comprenant les étapes consistant à :

mélanger

i) 20 parties en masse du latex de polymère de chloroprène selon l'une quelconque des revendications 1 à 3, et
ii) 80 parties en masse d'un latex de polymère de chloroprène contenant un polymère de base qui est obtenu par la copolymérisation de 5 à 30 % en masse de 2,3-dichloro-1,3-butadiène par rapport à un total de 100 % en masse de chloroprène et de 2,3-dichloro-1,3-butadiène, et présentant une teneur insoluble dans le toluène de 75 % en masse ou plus,

pour obtenir une composition de latex mélangés ; et
vulcaniser la composition de latex mélangés à 130 °C pendant 4 heures pour obtenir le revêtement moulé par immersion ;
dans lequel le revêtement moulé par immersion fournit un module à 100 % d'allongement de 0,40 à 0,70 MPa et une résistance à la rupture de 17 MPa ou plus lorsqu'elle est mesurée selon la norme JIS K 6251.

5. Corps moulé par immersion utilisant :

le latex de polymère de chloroprène selon l'une quelconque des revendications 1 à 3, ou
le revêtement moulé par immersion selon la revendication 4.

6. Corps moulé par immersion selon la revendication 5, dans lequel le corps moulé par immersion est des gants, des ballonnets, des cathéters ou des chaussures.

7. Procédé de fabrication pour obtenir le latex de polymère de chloroprène selon l'une quelconque des revendications 1 à 3, le procédé comprenant :

une étape de polymérisation consistant à soumettre au moins un sélectionné dans le groupe consistant en chloroprène et 2,3-dichloro-1,3-butadiène à une polymérisation en émulsion en présence d'un agent de transfert de chaîne à une température de polymérisation de 5 à 55°C et un taux de conversion de polymérisation de 50 à 95 %, dans lequel
à l'étape de polymérisation, une quantité mélangée de l'agent de transfert de chaîne est de 0,50 partie en masse ou plus et de moins de 15 parties en masse et une quantité mélangée du 2,3-dichloro-1,3-butadiène est de 50 parties en masse ou moins, par rapport à un total de 100 parties en masse du chloroprène et du 2,3-dichloro-1,3-butadiène.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7292165 A
- JP 2014114342 A
- WO 2019009038 A
- JP 2019143002 A
- JP 2011026423 A